# EUROPEAN PATENT SPECIFICATION

(11) **EP 2 745 917 B1**
(45) Date of publication and mention of the grant of the patent: **19.01.2022**
(21) Application number: 12197646.8
(22) Date of filing: 18.12.2012
(51) Int. Cl.: B01D 65/02

(54) **A liquid fluid filter assembly**
Flüssigkeitsfilteranordnung
Ensemble filtre de fluide liquide

(43) Date of publication of application: 25.06.2014
(73) Proprietor: Grundfos Holding A/S, 8850 Bjerringbro (DK)
(72) Inventor: Denning, Lars, 8300 Odder (DK); D'Antonio, Sébastien, 8881 Thorso (DK)
(74) Representative: Patentanwälte Vollmann Hemmer Lindfeld Partnerschaft mbB

(56) References cited:
- WO-A1-02/055182
- WO-A2-2013/040420
- CN-A- 102 210 978
- CN-Y- 201 120 256
- US-A1- 2008 142 041
- US-A1- 2008 203 017

## Description

The invention refers to a liquid fluid filter assembly including a cleaning device for chemical cleaning of filter, wherein the cleaning device comprises injection means arranged to inject a cleaning chemical into a fluid flow through said filter.

Liquid fluid filter assemblies are known in particular for micro-filtration and ultra-filtration and used in particular for filtration of water. For those filter assemblies integrated cleaning in place (CIP) systems are known. They are built into a larger fluid filter unit and typically comprising valves, pipes and tanks to allow a chemical cleaning of the filter assembly.

Further it is known to have a chemical enhanced backwash (CEB) of such filter assemblies, wherein clean water is mixed with chemicals and sent reversibly through the filter membrane. This water mixed with chemicals leaves the filter on its inlet side and is sent to drain. Such a chemical enhanced backwash requires a great amount of clean water which was cleaned by the filter before, which results in a reduced clean water output of the filter assembly. A cleaning in place system requires several pumps, valves and tanks and, thus, is a complex system.

CN 102210978 A discloses a filtration system and an apparatus and method for washing and repairing a membrane by means of a chemical fluid. In this device the chemicals for cleaning are pumped from chemical cleaning tanks through the filter elements. Then, the flow may be led to a drain or back into the tank. By this, the quality of the cleaning chemical in the tank will be decreased or a great amount of chemicals is required when feeding the used chemicals to the drain.

US 2008/0142041 A1 discloses a process for cleaning an installation like a membrane filter. This device needs a cold water supply and storage tanks used for the cleaning solutions. This results in a complex design of the installation and increased resources necessary for cleaning.

WO 02/055182 A1 discloses a reverse osmosis system with a controlled circulation. This system allows a membrane cleaning by directing cleaning chemicals along the filter in a cross-filtration mode.

US 2008/0203017 A1 discloses a chemical cleaning for a membrane filter according to which a cleaning agent is introduced to the permeant side of a membrane and/or to a feed side of the membrane. This chemical cleaning may be preceded or followed by a back wash requiring clean water.

CN201120256Y provides a reverse osmosis membrane cleaning device, which comprises a safety filter, a cleaning box, a cleaning pump and a control box, wherein the water inlet of the cleaning pump is connected with the bottom of the cleaning box through pipelines, the water outlet of the cleaning pump is divided into two pipe ways, one pipe way enters into the top of the cleaning box through pipelines by passing through a valve, the other way is connected to the behind of the valve of the water inlet pipe of the safety filter by passing through valves through pipelines, and is connected with the top of the cleaning box on the front position of the valve of a water producing pipe and on the front position of the valve of a concentrated water pipe through valves and pipelines, and the cleaning pump, a magnetic valve and a high pressure valve are respectively connected to the control box. The reverse osmosis membrane cleaning device can directly enter into the behind the valve of the water inlet of the safety filter which is arranged in front of the reverse osmosis membrane, saves filters used for filtering through cleaning liquid, the assembly and use are convenient, occupied area is small, the investment is saved and the cleaning cost is low.

In view of this it is an object of the invention to provide an improved liquid fluid filter assembly including a cleaning device having a less complex design and allowing to clean the filter with a reduced amount of fresh water and reduced amount of chemical.

This object is solved by a liquid fluid filter assembly having the features defined in claim 1. Preferred embodiments are defined in the dependent subclaims, the following description and the accompanying drawings.

The liquid filter assembly according to the invention comprises at least one filter. This filter may be designed for ultra-filtration, for example having a hollow fiber membrane. Besides this at least one filter, the liquid fluid filter assembly according to the invention comprises preferably at least one fixed pump for pumping the water to be filtered, through the filter membrane. Further, the filter assembly may comprise required valves and a control device for controlling the filtering process in known manner. According to the invention there is provided a special cleaning device for chemical cleaning, in particular an improved chemical internal cleaning in place. The cleaning device comprises injection means arranged to inject at least one cleaning chemical into a fluid flow through the filter. The fluid flow through the filter is provided by pumping clean water filtered by the filter before.

The inventive cleaning device of the fluid filter assembly comprises a circulation conduit. This circulation conduit is provided for the fluid flow used for cleaning the filter and allows a fluid flow for cleaning the filter in a closed-loop. This means that the circulation conduit provides a fluid flow back from the permeate outlet side of the filter to the feed or inlet side of the filter so that the fluid flows in a closed-loop. By providing a closed-loop fluid flow for cleaning, the amount of fresh water required for cleaning is reduced significantly. Said injection means is arranged to inject the cleaning chemical into the fluid of said closed-loop fluid flow. Thus, the water, mixed with the at least one cleaning chemical can be pumped in a closed-loop through said filter.

Further, the cleaning device has a control device controlling at least one valve and a pump activating said closed-loop fluid flow. This control device, preferably a programmable electric control device may be a separate control device just for the cleaning device. However, alternatively this control device for the cleaning device may be integrated into a control device for controlling the entire fluid filter assembly. The control device for the cleaning device is designed such that the control device can activate the closed-loop fluid flow for cleaning the filter by opening and/or closing required valves and by activating a circulation pump circulating the liquid fluid through said closed-loop provided by the circulation conduit. There may be provided valves, in particular solenoid valves or motor driven valves used to close other fluid conduits not used for the closed loop-fluid flow for cleaning. Further, there may be valves closing the circulation conduit during normal operation of the filter assembly, i. e. when no cleaning by use of the circulation conduit takes place. In particular there may be arranged a check valve inside the circulation conduit providing that unfiltered water enters the circulation conduit during filter operation. By such check valve it is ensured that all the liquid fluid to be filtered enters the inlet side of the filter. The check valves prevent the circulation conduit from acting as a bypass. Instead of such check valve, a solenoid valve or motor driven valve activated by the control device may be arranged in the circulation conduit. A circulation pump used for circulating the cleaning fluid, i. e. filtered liquid with cleaning chemicals through said closed-loop fluid flow is also arranged inside the circulation conduit. Thus, the circulation pump is arranged in a conduit which is not used during normal operation, i. e. during filter operation of the assembly.

Said cleaning device and said circulation conduit are designed to provide said closed-loop fluid flow through said filter from an inlet side to an outlet side of the filter. This means that the cleaning fluid flow flows in the same direction through the filter as during production. This is a difference compared to a chemical enhanced backwash since contrary to backwashing the cleaning fluid or liquid flows in the same direction as during production.

With the liquid fluid filter assembly according to the invention there may be an additional conventional backwash to remove particles on the entry side of the filter, i. e. on the entry side of a membrane or the outside of the fibers of the filter. The injection means may be arranged such that the cleaning chemical is injected into a conduit also used for the backwash of the filter. This allows carrying out a conventional chemical enhanced backwash with the cleaning device according to the invention. Thus, the injection device is preferably not arranged at the circulation conduit used only for the closed-loop liquid flow during cleaning. Preferably, the injection device is arranged at the outlet side of the filter.

Said circulation conduit comprises a circulation pump and one end of said circulation conduit is connected to the inlet side of the filter and the opposite other end of the circulation conduit is connected to the outlet side of the filter. Further, preferably the outlet side of the circulation pump is connected to the inlet side of the filter, which allows a fluid flow in the same direction as during production.

As explained above, said cleaning device is designed such that a fluid, which has been filtered by the filter is used in the closed-loop fluid flow. There may be provided a tank on the outlet side of the filter for collecting the cleaned or filtered fluid, in particular water. For the closed-loop fluid flow, fluid may be sucked out of this tank, preferably by the circulation pump arranged in the circulation conduit. By such design it is ensured that no additional fluid for cleaning has to be delivered from the outside. The required fluid is produced by the filter assembly itself. This allows a simple design of the cleaning device and to easily establish the closed-loop fluid flow with only a few additional parts in the filter assembly. Substantially it is only the circulation conduit, the circulation pump and a corresponding control device, which is required to establish the closed-loop fluid flow for cleaning.

According to a further preferred embodiment of the invention said at least one cleaning chemical may be chlorine. The cleaning chemical may be provided in a cleaning chemical tank as part of the liquid fluid filter assembly. This allows to automatically start the cleaning process by the control device without applying additional installations to the fluid filter assembly.

Instead of only one injection means there may be provided a plurality of injection means arranged to inject a cleaning chemical into fluid flow, in particular said closed-loop fluid flow. Thus, there are at least two injection means to inject two different cleaning chemicals into the fluid flow. Related to each injection means there may be a corresponding tank or canister for a chemical to be injected into the fluid flow. In addition to or as an alternative to chlorine there may be a tank with a chemical base and/or a tank with a chemical acid to be injected into the closed-loop fluid flow. Further it may be possible to provide two or more chemical tanks for two or more different cleaning chemicals which are injected into the fluid flow by the same injection means. There may be arranged valves between the single injection means and the different tanks to selectively bring the tanks into connection with the injection means.

As mentioned before, preferably an additional backwashing means may be provided in the liquid fluid filter assembly according to the invention for backwashing said filter using fluid filtered by said filter and controlled by said control device, wherein said control device is designed such that the cleaning of the filter is started by activating said backwashing means for a predetermined amount of time before activating said closed-loop fluid flow. By this, it is ensured that the closed-loop is completely filled with fresh clean fluid before starting the chemical cleaning process using the closed-loop fluid flow as describes. Further, by backwashing particles may be removed from the entry side of the filter or filter membrane. The backwashing means may comprise necessary valves and/or pumps, in particular a backwashing pump, which are activated by a control device. This may be the special control device of the cleaning device or a control device for the entire filter assembly also providing the control of the cleaning device and the backwashing means by respective control programs. This allows to automatically stop the production of the filter and to activate the backwashing means first before then activating the cleaning device to carry out the cleaning by the closed-loop fluid flow.

Said injection means comprises a metering pump or metering valve for dosing the at least one cleaning chemical into the closed-loop-fluid flow. The metering pump or metering valve allows to inject exactly a desired amount of cleaning chemical into the fluid flow so that the amount of cleaning chemical may be reduced. The metering pump or metering valve may be controlled by the control device controlling the entire cleaning device or entire filter assembly and in particular the cleaning process. In particular, the control device is designed such that the control device can calculate or define the required amount of cleaning chemical to be injected and give a required signal to the metering pump or metering valve to pump or inject just this defined amount of cleaning chemical into the fluid flow.

Said injection means are controlled by said control device and said injection means and said control device are designed such that said at least one cleaning chemical is injected into the fluid in intervals.

A predefined amount of cleaning chemical is injected in intervals. The intervals and/or the amount defined by the control device and the dosing is carried out by a metering pump or metering valve as explained before.

Furthermore, preferably there is provided a pressure sensor means for detecting a transfilter pressure between both sides of the filter, i. e. between the inlet and the outlet side of the filter. The pressure difference between the inlet and the outlet side of the filter increases when the filter is clogging. Thus, the transfilter pressure can be used as an indicator for the clogging of the filter to start the cleaning processs and to detect a sufficient cleaning of the filter to stop afore-mentioned cleaning process.

Preferably said pressure sensor means is connected to said control device and said control device is designed to detect the desired cleaning result on basis of a transfilter pressure detected by said pressure sensor means. There may be a pressure threshold to be achieved by the cleaning process. If the transfilter pressure falls below this threshold, this may indicate that the filter is sufficiently cleaned and the cleaning process can be stopped by the control device. Alternatively the cleaning process may be stopped if the detected pressure value becomes stable.

According to a further preferred embodiment, there may be arranged a fluid sensor means for detecting at least one chemical or physical parameter of the fluid in said closed-loop fluid flow. This chemical or physical parameter may alternatively or additionally be used to evaluate the cleaning result. This means that the sufficient cleaning result may be detected on basis of a chemical or physical parameter of the fluid in said closed-loop fluid flow.

Said fluid flow sensor means may be connected to said control device, wherein the control device is designed to detect the desired cleaning result on basis of the chemical or physical parameter of the fluid detected by said fluid sensor means. The parameter may be the concentration of the cleaning chemical in the fluid measured, e. g. by a direct chlorine sensor, or a parameter proportional to this concentration. During the cleaning process, the cleaning chemical, for example chlorine, is reacting with primarily organic compounds trapped on or in the filter membrane, for example the filter fibers. This results in a decrease of chemical concentration in the fluid flow as long as the chemicals are reacting with the compounds to be removed. When the impurities or compounds are removed by reaction with the chemicals the reaction activity becomes lower and the concentration of cleaning chemical in the fluid flow increases. This may be detected by the fluid sensor means and the control device may stop the cleaning process to start the production of the filter again.

When finishing the cleaning process described, the fluid in the closed-loop including the cleaning chemical is fed to the drain. However, since the fluid was pumped in a closed-loop for cleaning it is only a small amount of fluid, which has to be drained. Thus, the required amount of fluid and the amount of chemicals is significantly reduced by the invention.

The parameter proportional to the concentration of the cleaning chemical in the fluid preferably may be a redox potential and/or a pH-value of the cleaning chemical in the fluid. The sensor means may be pH and/or an ORP (oxidation reduction potential) sensor. The chemical, for example chlorine does not have more effect on the cleaning when a certain predefined value given by such ORP sensor is achieved. Thus by detecting such value, the control device detects a sufficient cleaning result and stops the cleaning process as described before.

The control device preferably is designed such that the desired cleaning result is assumed when the concentration of the cleaning chemical or the parameter proportional to this concentration becomes stable. This may for example be detected in the predescribed manner.

Further, preferably the control device is configured to detect the concentration of cleaning chemical or the parameter proportional concentration after a predetermined amount of time after adding the cleaning chemical to the fluid. This means the cleaning chemical is injected into the fluid, by a metering valve or metering pump. Then, after a predetermined amount of time, the concentration or the parameter proportional to the concentration is detected by the fluid sensor means. If then the concentration increases or becomes stable as described before, the control device may detect this as a sufficient cleaning result.

According to a further preferred embodiment, the control device is designed to control the injection means to periodically inject a predetermined amount of cleaning chemical into the fluid flow and to detect the redox potential and/or pH-value by the sensor means a predetermined period of time after injecting the cleaning chemical until a minimum stable redox potential or pH-value is detected. This is the preferred way to detect this sufficient cleaning result.

According to a further preferred embodiment of the invention the liquid fluid filter assembly is designed such that the volume of the fluid circulating in the closed-loop through the filter essentially corresponds to the volume of the liquid that can be contained in the filter. This means that the volume of liquid contained in the filter is much greater than the volumes in the pipes forming the closed-loop circuit for the closed-loop fluid flow through the filters. Thus, the ratio of the volume of liquid in the filter to the entire volume of the closed-loop is close to 1.

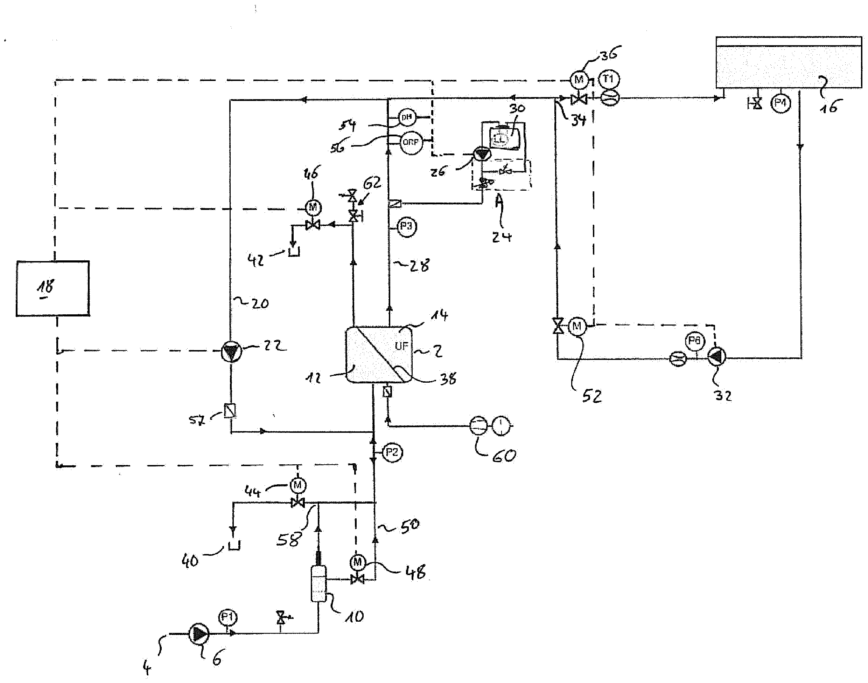

In the following the invention is described with reference to the accompanying drawing schematically showing the design of a liquid fluid filter assembly according to the invention.

The central element of the liquid fluid filter assembly shown in the figure is a membrane filter 2 which is designed as a hollow fiber membrane filter. In this example the filter 2 is used to clean water, in particular making drinking water. The water is fed from a raw water source 4 by a feed pump 6. The water is pumped by the feed pump 6 through prefilter 10 to the inlet side 12 of filter 2. The water is pumped through the filter 2 and from the outlet side 14 it is flowing to a buffer tank 16. The hollow fiber membrane filter can be used in the "outside in" or "inside out" mode. In this embodiment the dirty liquid enters from the outside.

The shown fluid filter assembly further includes a cleaning device. The cleaning device is controlled by a controlling device 18 which is connected to several pumps and valves which form part of a cleaning device. A further essential part of the cleaning device is a circulation conduit 20 connecting the outlet side 14 with the inlet side 12 of the filter 2. In the circulation conduit 20 there is arranged a circulation pump 22 which is connected to the controlling device 18 such that the controlling device 18 can start and stop the circulation pump 22 running. Further, the cleaning device comprises injection means 24 including a metering pump 26, whose outlet ends into an outlet flow path 28 downstream the outlet side 14 of the fluid filter 2. The injection means 24 further comprise a tank or canister 30, respectively containing a cleaning chemical as chlorine. The cleaning chemical is pumped from the canister 30 by the metering pump 26 into the outlet flow path 28. The metering pump 26 is connected to the controlling device 18 so that the controlling device 18 can activate the metering pump 26 and cause the metering pump to pump a desired amount of cleaning chemical into the outlet flow path 28.

For chemical cleaning of the filter 2 a closed-loop fluid flow is established via the circulation conduit 20 by the circulation pump 22. The circulation pump 22 circulates the fluid inside the circulation conduit 20 such that it flows into the inlet side 12 of filter 2 and flows from the outlet side 14 via the outlet flow path 28 back into the circulation conduit 20 to the inlet side of the circulation pump 22. This means that the closed-loop fluid flow for cleaning has the same direction as the water flow during production, i. e. from the inlet 12 to the outlet side 14 of filter 2. This is a direction opposite to the flow direction used in normal backwash.

The amount of fluid used when circulating through conduit 20, filter 2 and outlet flow path 28 is relatively low. The volume of the fluid circulating essentially corresponds to the volume of liquid that can be contained in filter 2. For example, in this embodiment the filter 2 holds 40 litres, and the combined volume in the conduit 20 and the outlet flow path 28 amounts to about 1 litre. Thus the ratio defined by the volume of liquid in the filter divided by the sum of volume of liquid in the filter plus volume of liquid in the closed loop pipes is close to 1. The low amount of fluid circulating during the cleaning makes it possible to use only a small amount of chemical.

For the cleaning via the closed-loop fluid flow, clean water from the buffer tank 16 is used. In a first step the controller 18, therefore, starts a backwash to ensure that the circulation conduit 20 and the entire flow path of the closed-loop fluid flow is completely filled with clean water. For backwashing there is provided a backwash pump 32. The backwash pump 32 is also connected to controlling device 18 so that it can be activated and stopped by the controlling device 18. The inlet side of the backwash pump 32 is connected to the buffer tank 16, the outlet side is connected to the outlet flow path 28 leading from the outlet side 14 of the filter 2 to the buffer tank 16. Between the connecting point 34 at which the flow path from the backwash pump 32 is open to the outlet flow path 28 and the buffer tank 16 there is arranged a motor driven valve 36. This motor driven valve 36 is also connected to the controlling device 18 such that it can be closed and opened by the controlling device 18. For starting the backwash the motor driven valve 36 is closed by the controlling device 18 and the backwash pump 32 is activated. Thus, clean water from the buffer tank 16 is pumped by the backwash pump 32 into the outlet flow path 28 and into the outlet side 14 of the filter 2. The water flows backwards through the membrane 38 of filter 2 to the inlet side 12 of the filter. In normal backwash process, the water further flows into the drain 40. To close the drain 40 and 42 there are provided motor driven valves 44 and 46 which are connected to the controlling device 18 such that the controlling device 18 can open and closed the valves 44 and 46. For the backwash process, the valves 44 and 46 are opened so that clean water fed by the backwash pump is sent in reversed direction through the membrane, thereby removing the particles trapped on the outer surface of the fibers, i. e. on the inlet side of the membrane. Then, the water is directed from the inlet side 12 of the filter through the valves 44 and 46 into drain 40 and 42.

To prevent the water further flowing upwards the inlet flow path 50 there is provided a further motor driven valve 48 in the inlet flow path 50 connecting the feed pump 6 and the inlet 12 of filter 2. The valve 48 is connected to controlling device 18 so that the valve 48 can be opened and closed by controlling device 18. During the backwashing process the motor driven valve 48 is closed. Further, the feed pump 6 is stopped. During normal production the valve 48 is opened and feed pump 6 is running.

Different to this normal backwashing process at the beginning of the chemical cleaning or backwashing process, the circulation pump 22 is running simultaneously with the backwash pump 32 such that clean water is sucked into the circulation conduit 20 such that this conduit or pipe is filled with clean water. This is done for a predetermined period of time until the circulation conduit 20 is completely filled with clean water. Then the valves 44 and 46 are closed. Further, the backwash pump 32 is stopped and also the valve 36 in front of the buffer tank 16 is closed. A further, motor driven valve 52 is arranged in the flow path between the outlet side of backwash pump 32 and the connecting point 34. Also this valve 52 is closed when stopping the backwash process to prevent water used during the cleaning process to enter into the buffer tank 16.

The circulation pump 22, however, is starting again or kept running so that a closed-loop fluid flow through the circulation conduit 20 and through filter 2 is established. The water is pumped by the circulation pump 22 into the inlet side 12 of filter 2, then the water is flowing through membrane 38 and from the outlet side 14 via the outlet flow path 28 back into the circulation conduit 20. All other parts of the filter assembly are closed by the respective valves described before. The closed-loop fluid flow is directed in the same direction through the filter as during clean water production by the filter. In the next step a cleaning chemical is added to the closed-loop fluid flow by the injection means 24. The metering pump 26 is activated by controlling device 18 to inject a defined amount of cleaning chemical as chlorine in the fluid of the closed-loop fluid flow. This is done periodically. Because of the closed-loop fluid flow only a minimum amount of fresh water and cleaning chemicals are required since during the entire cleaning process substantially no fluid is directed to the drain.

The cleaning process is controlled by the controlling device 18 via two fluid sensors, namely a pH-sensor 54 and an ORP (oxidation reduction-potential) sensor 56 arranged in the portion of the outlet flow path 28 being part of the closed-loop fluid flow.

During the chemical cleaning the closed-loop circulation pump 22 circulates the water with the injected cleaning chemical in a closed-loop. "Closed-loop" means that the liquid is not exposed to free air, i. e. from an open tank. It also means that the liquid pumped out of the circulation pump 22 is essentially the same liquid which will be sucked in after being let through the filter membrane 38 and the pipes. The cleaning fluid is thus not, as in the prior art, directly let to the drain after being used but is reused a number of times before finally sent to drain 40.

When injecting the cleaning chemical into the fluid flow, the pressure in the pipe will increase. Therefore, the valve 46 may be opened at certain intervals to release the pressure in the pipe, for example after injecting one liter of cleaning chemical.

The ORP sensor 56 indirectly measures the concentration of the cleaning chemical, in this example chlorine, and the efficiency of the cleaning during circulation. The ORP sensor 56 measures the redox potential which is proportional to the concentration of cleaning chemicals in the water inside the closed-loop fluid flow. As long as the cleaning chemical is reacting with primarily organic compounds and biological fouling trapped on or in the fibers of membrane 38 the free chemical concentration will decrease. The circulation of the cleaning fluid by the circulation pump 22 is done for a certain amount of time without injecting further cleaning chemical, for example for 10 seconds and then, if needed, further chemicals may be injected by activating the metering pump 26. When the impurities and in particular organic compounds are removed by reaction of the cleaning chemical, the concentration of cleaning chemical will increase if further cleaning chemical is injected into the fluid flow. This can be detected by the ORP sensor 56. The cleaning chemical does not have any more effect on the cleaning when the value by the ORP sensor reaches a certain threshold, then the cleaning is done and the controlling device 18 will stop the cleaning process by stopping the circulation pump 22.

During the cleaning process just described, a step comprising air cleaning can be introduced. An air compressor 60 is used to send air through the filter 2 and out through an air valve 62. More specifically, while the pump 22 is circulating and the injection means 24 is dosing, the controller stops the pump 22 and the injection 24, and starts the compressor 60 and opens the valve 24. The effect is a "shaking" of the fibers inside the hollow fiber filter; the fibers will collide with one another, hence loosen particles, and the chemical will be better mixed because the chemical will also reach dead ends of the filter.

By activating the backwash pump 32 and opening the valves 52, 44 and 46 clean water will be pumped into the pipes and the mixture of water and chemicals used for cleaning is removed to drain 40 and 42. If at the same time also the circulation pump 22 is kept running also the circulation conduit 20 will be filled with clean water and the cleaning fluid including chemicals will be removed from circulation conduits 20 into drain 40.

Afterwards the backwash pump 32 and the circulation pump 22 are stopped, the valves 44, 46 and 52 are closed whereas valves 36 and 48 are opened. Then the feed pump 6 is started again and production starts again. During production water is prevented from entering circulation conduit 20 by check valve 57.

The pH-sensor 54 can be used also if the cleaning chemical is a base or an acid. The feedback of sensor 54 will tell the control device to dose more chemical until a desired pH-value is reached.

When removing the cleaning fluid including the chemicals into the drain 40 and 42 in order to reduce the concentration of chemicals flushed into the drain, the feed pump 6 may add raw water, i. e. unfiltered water, to the fluid including chemicals in the mixing point 58 just before the fluid is entering the drain 40. Due to this mixing the chemical concentration in the waste water can be lowered to an amount acceptable for flushing directly into the drain 40. During this mixing, the pressure generated by the feed pump must be equal to or lower than the pressure in the pipe which is being flushed. Otherwise the fluid containing chemicals will be pushed back into the pipe system and the clean water tank.

Further, in this example there are provided two pressure transmitters P2 and P3, wherein the pressure transmitter P2 is arranged on the inlet side 12 of the filter 2 and the pressure transmitter P3 is arranged on the outlet path 28 on the outlet side 14 of the filter 2. The pressure transmitters P2 and P3 allow measuring a transfilter pressure between the inlet side and the outlet side of the filter. An increase of this transfilter pressure indicates a clogging of the filter which may require a chemical cleaning as described. Note, that pressure transmitters P2 and P3, as well as other sensors and valves in the figure, preferably are connected to the controlling device 18 although not shown with dotted lines in the figure.

In a preferred embodiment, the filter assembly may include a post treatment tank, which incorporates the used chemical fluid. By integrating such tank into the assembly, space is saved and the cleaning assembly is thus fully integrated into one unit. There is no need for external tanks or pipes.

Further, the explained configuration also allows using the chemicals during the described backwash. Then, the chemicals will be injected by the metering pump 26 during the described backwash process. This can be activated by controlling device 18. The control device may be a separate control device or may be integrated into the electronics controlling the entire filter assembly, in particular for example the feed pump 6. In a very special embodiment the controlling device 18 can be integrated into the electronics of a speed regulated pump, especially a centrifugal pump, for example of circulating pump 22 or feed pump 6.

In order to obtain a better efficiency of the cleaning chemical in the fluid, a heating element (not shown) may be inserted in the conduit 20. Such heating element will be activated in case of low fluid temperature.

### List of reference numerals

- 2: filter
- 4: raw water source
- 6: feed pump
- 10: prefilter
- 12: inlet side
- 14: outlet side
- 16: buffer tank
- 18: controlling device
- 20: circulation conduit
- 22: circulation pump
- 24: injecting means
- 26: metering pump
- 28: outlet flow path
- 30: canister
- 32: backwash pump
- 34: connecting point
- 36: valve
- 38: membrane
- 40,42: drain
- 44, 46, 48: valves
- 50: inlet flow path
- 52: valve
- 54: pH-sensor
- 56: ORP sensor
- 57: check valve
- 58: mixing point
- 60: air compressor
- 62: air valve

- P2, P3: pressure sensor

## Claims

1. A liquid fluid filter assembly for filtration of water including a cleaning device for chemical cleaning of a filter (2), wherein
the cleaning device comprises injection means (24) arranged to inject a cleaning chemical into a fluid flow through the filter (2), the cleaning device comprises a circulation conduit (20) which provides a closed loop fluid flow through the filter (2) in the same direction as the water flow during production, wherein said cleaning device is designed such that a fluid which has been filtered by the filter (2) is used in the closed loop fluid flow and said injection means (24) is arranged to inject the cleaning chemical into the fluid of said closed loop fluid flow, and
a control device (18) controlling at least one valve (36, 46, 44, 52) and a circulation pump (22) arranged inside the circulation conduit (20) activating said closed loop fluid flow,
**characterized in that** the injection means (24) comprises a metering pump (26) or metering valve for dosing the at least one cleaning chemical into the closed loop fluid flow and that said injection means (24) is controlled by said control device (18) and said injection means (24) and said control device (18) are designed such that said at least one cleaning chemical is injected into the fluid in intervals, wherein the control device is designed such that the control device defines the required amount of cleaning chemical to be injected and gives a required signal to the metering pump or metering valve to pump or inject just this defined amount of cleaning chemical into the fluid flow.

2. The liquid fluid filter assembly according to claim 1, **characterized in that** one end of said circulation conduit (20) is connected to the inlet side (12) of the filter (2) and the opposite other end of the circulation conduit is connected to the outlet side (14) of the filter (2).

3. The liquid fluid filter assembly according to one of the preceding claims, **characterized in that** said cleaning device comprises a plurality of injection means (24) injecting cleaning chemicals into the fluid of said closed loop fluid flow.

4. The liquid fluid filter assembly according to one of the preceding claims, **characterized by** backwashing means (32) provided for backwashing said filter using fluid filtered by said filter and controlled by said control device (18), wherein said control device (18) is designed such that the cleaning of the filter (2) is started by activating said backwashing means (32) for a predetermined amount of time before activating said closed loop fluid flow.

5. The liquid fluid filter assembly according to one of the preceding claims, **characterized in that** said injection means (24) is controlled by said control device (18) and said injection means (24) and said control device (18) are designed such that said at least one cleaning chemical is injected into said fluid in predetermined amounts.

6. The liquid fluid filter assembly according to one of the preceding claims, **characterized by** pressure sensor means (P2, P3) for detecting a transfilter pressure between both sides of the filter.

7. The liquid fluid filter assembly according to claim 6, **characterized in that** said pressure sensor means is connected to said control device (18), wherein the control device (18) is designed to detect the desired cleaning result on basis of a transfilter pressure detected by said pressure sensor means (P2, P3).

8. The liquid fluid filter assembly according to one of the preceding claims, **characterized by** fluid sensor means (54, 56) for detecting at least one chemical or physical parameter of the fluid in said closed loop fluid flow.

9. The liquid fluid filter assembly according to claim 9, **characterized in that** said fluid sensor means (54, 56) is connected to said control device (18), wherein the control device is designed to detect the desired cleaning result on basis of a chemical or physical parameter of the fluid detected by said fluid sensor means (54, 56).

10. The liquid fluid filter assembly according to claim 9, **characterized in that** the parameter is the concentration of the cleaning chemical in the fluid or a parameter proportional to this concentration.

11. The liquid fluid filter assembly according to claim 9 or 10, **characterized in that** the parameter is a redox potential or pH-value of the cleaning chemical in the fluid.

12. The liquid fluid filter assembly according to claim 10 or 11, **characterized in that** the control device (18) is designed such that the desired cleaning result is assumed when the concentration of the cleaning chemical or the parameter proportional to this concentration becomes stable.

13. The liquid fluid filter assembly according to claim 12, **characterized in that** the control device (18) is configured to detect the concentration of cleaning chemical or the parameter proportional to this concentration after a predetermined amount of time after adding the cleaning chemical to the fluid.

14. The liquid fluid filter assembly according to claim 13, **characterized in that** the control device (18) is designed to control the injection means (24) to periodically inject a predetermined amount of cleaning chemical into the fluid flow and to detect the redox potential or pH-value by the sensor means (54, 56) a predetermined period of time after injecting the cleaning chemical until a minimum stable redox potential or pH-value is detected.

15. The liquid fluid filter assembly according to any of the preceding claims, **characterized in that** the volume of the fluid circulating in a closed loop through the filter essentially corresponds to the volume of the liquid that can be contained in the filter (2).

## Patentansprüche

1. Flüssigkeitsfilteranordnung zur Filtration von Wasser, enthaltend eine Reinigungsvorrichtung zum chemischen Reinigen eines Filters (2), wobei
die Reinigungsvorrichtung ein Einspritzmittel (24) umfasst, das zum Einspritzen einer Reinigungschemikalie in eine Fluidströmung durch das Filter (2) angeordnet ist, wobei die Reinigungsvorrichtung eine Umlaufleitung (20) umfasst, die einen geschlossenen Fluidströmungskreis durch das Filter (2) in derselben Richtung wie die Wasserströmung während der Erzeugung vorsieht, wobei die Reinigungsvorrichtung derart ausgelegt ist, dass ein Fluid, das durch das Filter (2) gefiltert wurde, in dem geschlossenen Fluidströmungskreis benutzt wird und das Einspritzmittel (24) zum Einspritzen der Reinigungschemikalie in das Fluid des geschlossenen Fluidströmungskreises angeordnet ist, und
eine Steuervorrichtung (18), die zumindest ein Ventil (36, 46, 44, 52) und eine Umlaufpumpe (22) steuert, welche innerhalb der Umlaufleitung (20) angeordnet sind und den geschlossenen Fluidströmungskreis aktivieren,
**dadurch gekennzeichnet, dass** das Einspritzmittel (24) eine Zumesspumpe (26) oder ein Zumessventil zum Dosieren der zumindest einen Reinigungschemikalie in den geschlossenen Fluidströmungskreis umfasst, und dass
das Einspritzmittel (24) durch die Steuervorrichtung (18) gesteuert wird und das Einspritzmittel (24) und die Steuervorrichtung (18) derart ausgelegt sind, dass die zumindest eine Reinigungschemikalie in Intervallen in das Fluid eingespritzt wird, wobei die Steuervorrichtung derart ausgelegt ist, dass die Steuervorrichtung die erforderliche Reinigungschemikalienmenge, die eingespritzt werden soll, definiert und ein erforderliches Signal an die Zumesspumpe oder das Zumessventil zum Pumpen oder Einspritzen von genau dieser definierten Reinigungschemikalienmenge in die Fluidströmung gibt.

2. Flüssigkeitsfilteranordnung nach Anspruch 1, **dadurch gekennzeichnet, dass** ein Ende der Umlaufleitung (20) mit der Einlassseite (12) des Filters (2) verbunden ist und das gegenüberliegende Ende der Umlaufleitung mit der Auslassseite (14) des Filters (2) verbunden ist.

3. Flüssigkeitsfilteranordnung nach einem der vorhergehenden Ansprüche, **dadurch gekennzeichnet, dass** die Reinigungsvorrichtung mehrere Einspritzmittel (24) umfasst, die Reinigungschemikalien in das Fluid des geschlossenen Fluidströmungskreises einspritzen.

4. Flüssigkeitsfilteranordnung nach einem der vorhergehenden Ansprüche, **gekennzeichnet durch** Rückspülungsmittel (32), die zum Rückspülen des Filters unter Benutzung von Fluid, das durch den Filter gefiltert und durch die Steuervorrichtung (18) gesteuert wird, vorgesehen sind, wobei die Steuervorrichtung (18) derart ausgelegt ist, dass das Reinigen des Filters (2) durch Aktivieren der Rückspülungsmittel (32) für eine vorbestimmte Zeitdauer vor dem Aktivieren des geschlossenen Fluidströmungskreises begonnen wird.

5. Flüssigkeitsfilteranordnung nach einem der vorhergehenden Ansprüche, **dadurch gekennzeichnet, dass** das Einspritzmittel (24) durch die Steuervorrichtung (18) gesteuert wird und das Einspritzmittel (24) und die Steuervorrichtung (18) derart ausgelegt sind, dass die zumindest eine Reinigungschemikalie in vorbestimmten Mengen in das Fluid eingespritzt wird.

6. Flüssigkeitsfilteranordnung nach einem der vorhergehenden Ansprüche, **gekennzeichnet durch** ein Drucksensormittel (P2, P3) zum Erkennen eines Transfilterdrucks zwischen beiden Seiten des Filters.

7. Flüssigkeitsfilteranordnung nach Anspruch 6, **dadurch gekennzeichnet, dass** das Drucksensormittel mit der Steuervorrichtung (18) verbunden ist, wobei die Steuervorrichtung (18) zum Erkennen des erwünschten Reinigungsergebnisses auf Grundlage eines Transfilterdrucks, der durch das Drucksensormittel (P2, P3) erkannt wird, ausgelegt ist.

8. Flüssigkeitsfilteranordnung nach einem der vorhergehenden Ansprüche, **gekennzeichnet durch** ein Fluidsensormittel (54, 56) zum Erkennen von zumindest einem chemischen oder physikalischen Parameter des Fluids in dem geschlossenen Fluidströmungskreis.

9. Flüssigkeitsfilteranordnung nach Anspruch 9, **dadurch gekennzeichnet, dass** das Fluidsensormittel (54, 56) mit der Steuervorrichtung (18) verbunden ist, wobei die Steuervorrichtung zum Erkennen des erwünschten Reinigungsergebnisses auf Grundlage eines chemischen oder physikalischen Parameters des Fluids, der durch das Fluidsensormittel (54, 56) erkannt wird, ausgelegt ist.

10. Flüssigkeitsfilteranordnung nach Anspruch 9, **dadurch gekennzeichnet, dass** der Parameter die Konzentration der Reinigungschemikalie im Fluid oder ein zu dieser Konzentration proportionaler Parameter ist.

11. Flüssigkeitsfilteranordnung nach Anspruch 9 oder 10, **dadurch gekennzeichnet, dass** der Parameter ein Redoxpotential oder pH-Wert der Reinigungschemikalie im Fluid ist.

12. Flüssigkeitsfilteranordnung nach Anspruch 10 oder 11, **dadurch gekennzeichnet, dass** die Steuervorrichtung (18) derart ausgelegt ist, dass das erwünschte Reinigungsergebnis vorausgesetzt wird, wenn die Konzentration der Reinigungschemikalie oder der zu dieser Konzentration proportionale Parameter stabil wird.

13. Flüssigkeitsfilteranordnung nach Anspruch 12, **dadurch gekennzeichnet, dass** die Steuervorrichtung (18) zum Erkennen der Reinigungschemikalienkonzentration oder des zu dieser Konzentration proportionalen Parameters nach einer vorbestimmten Zeitdauer nach dem Zusetzen der Reinigungschemikalie zum Fluid ausgelegt ist.

14. Flüssigkeitsfilteranordnung nach Anspruch 13, **dadurch gekennzeichnet, dass** die Steuervorrichtung (18) zum Steuern des Einspritzmittels (24) zum periodischen Einspritzen einer vorbestimmten Reinigungschemikalienmenge in die Fluidströmung und zum Erkennen des Redoxpotentials oder pH-Werts durch das Sensormittel (54, 56) einen vorbestimmten Zeitraum nach dem Einspritzen der Reinigungschemikalie, bis ein minimalstabiles Redoxpotential oder ein minimalstabiler pH-Wert erkannt wird, ausgelegt ist.

15. Flüssigkeitsfilteranordnung nach einem der vorhergehenden Ansprüche, **dadurch gekennzeichnet, dass** das Volumen des Fluids, das in einem geschlossenen Kreis durch das Filter umläuft, im Wesentlichen dem Volumen der Flüssigkeit entspricht, das im Filter (2) enthalten sein kann.

## Revendications

1. Ensemble filtre de fluide liquide pour filtration d'eau comprenant un dispositif de nettoyage permettant le nettoyage chimique d'un filtre (2), dans lequel
le dispositif de nettoyage comprend un moyen d'injection (24) agencé pour injecter un produit chimique de nettoyage dans un écoulement de fluide à travers le filtre (2), le dispositif de nettoyage comprend un conduit de circulation (20) qui fournit un écoulement de fluide en boucle fermée à travers le filtre (2) dans la même direction que l'écoulement d'eau en cours de production, dans lequel ledit dispositif de nettoyage est conçu de façon telle qu'un fluide qui a été filtré par le filtre (2) est utilisé dans l'écoulement de fluide en boucle fermée, et ledit moyen d'injection (24) est agencé pour injecter le produit chimique de nettoyage dans le fluide dudit écoulement de fluide en boucle fermée, et
un dispositif de commande (18) commandant au moins une soupape (36, 46, 44, 52) et une pompe de circulation (22) agencées à l'intérieur du conduit de circulation (20) activant ledit écoulement de fluide en boucle fermée,
**caractérisé en ce que** le moyen d'injection (24) comprend une pompe de dosage (26) ou une soupape de dosage permettant de doser le produit chimique de nettoyage, au moins au nombre de un, dans l'écoulement de fluide en boucle fermée, et **en ce que**
ledit moyen d'injection (24) est commandé par ledit dispositif de commande (18), et ledit moyen d'injection (24) et ledit dispositif de commande (18) sont conçus de façon telle que ledit produit chimique de nettoyage, au moins au nombre de un, est injecté dans le fluide par intervalles, le dispositif de commande étant conçu de telle sorte que le dispositif de commande définit la quantité requise de produit chimique de nettoyage à injecter et donne un signal requis à la pompe ou à la soupape de dosage pour pomper ou injecter uniquement cette quantité définie de produit chimique de nettoyage dans l'écoulement de fluide.

2. Ensemble filtre de fluide liquide selon la revendication 1, **caractérisé en ce qu'**une extrémité dudit conduit de circulation (20) est reliée au côté d'entrée (12) du filtre (2) et l'autre extrémité opposée du conduit de circulation est reliée au côté de sortie (14) du filtre (2).

3. Ensemble filtre de fluide liquide selon l'une des revendications précédentes, **caractérisé en ce que** ledit dispositif de nettoyage comprend une pluralité de moyens d'injection (24) injectant des produits chimiques de nettoyage dans le fluide dudit écoulement de fluide en boucle fermée.

4. Ensemble filtre de fluide liquide selon l'une des revendications précédentes, **caractérisé par** des moyens de lavage à contre-courant (32) prévus pour laver à contre-courant ledit filtre en utilisant du fluide filtré par ledit filtre et commandé par ledit dispositif de commande (18), dans lequel ledit dispositif de commande (18) est conçu de façon telle que le nettoyage du filtre (2) est démarré en activant lesdits moyens de lavage à contre-courant (32) pendant une durée prédéterminée avant d'activer ledit écoulement de fluide en boucle fermée.

5. Ensemble filtre de fluide liquide selon l'une des revendications précédentes, **caractérisé en ce que** ledit moyen d'injection (24) est commandé par ledit dispositif de commande (18), et ledit moyen d'injection (24) et ledit dispositif de commande (18) sont conçus de façon telle que ledit produit chimique de nettoyage, au moins au nombre de un, est injecté dans ledit fluide en des quantités prédéterminées.

6. Ensemble filtre de fluide liquide selon l'une des revendications précédentes, **caractérisé par** un moyen formant capteur de pression (P2, P3) permettant de détecter une pression différentielle entre les deux côtés du filtre.

7. Ensemble filtre de fluide liquide selon la revendication 6, **caractérisé en ce que** ledit moyen formant capteur de pression est relié audit dispositif de commande (18), dans lequel le dispositif de commande (18) est conçu pour détecter le résultat de nettoyage souhaité sur la base d'une pression différentielle détectée par ledit moyen formant capteur de pression (P2, P3).

8. Ensemble filtre de fluide liquide selon l'une des revendications précédentes, **caractérisé par** un moyen formant capteur de fluide (54, 56) permettant de détecter au moins un paramètre chimique ou physique du fluide dans ledit écoulement de fluide en boucle fermée.

9. Ensemble filtre de fluide liquide selon la revendication 9, **caractérisé en ce que** ledit moyen formant capteur de fluide (54, 56) est relié audit dispositif de commande (18), dans lequel le dispositif de commande est conçu pour détecter le résultat de nettoyage souhaité sur la base d'un paramètre chimique ou physique du fluide détecté par ledit moyen formant capteur de fluide (54, 56).

10. Ensemble filtre de fluide liquide selon la revendication 9, **caractérisé en ce que** le paramètre est la concentration du produit chimique de nettoyage dans le fluide ou un paramètre proportionnel à cette concentration.

11. Ensemble filtre de fluide liquide selon la revendication 9 ou 10, **caractérisé en ce que** le paramètre est un potentiel d'oxydoréduction ou une valeur de pH du produit chimique de nettoyage dans le fluide.

12. Ensemble filtre de fluide liquide selon la revendication 10 ou 11, **caractérisé en ce que** le dispositif de commande (18) est conçu de façon telle que le résultat de nettoyage souhaité est supposé lorsque la concentration du produit chimique de nettoyage ou lorsque le paramètre proportionnel à cette concentration devient stable.

13. Ensemble filtre de fluide liquide selon la revendication 12, **caractérisé en ce que** le dispositif de commande (18) est configuré pour détecter la concentration de produit chimique de nettoyage ou le paramètre proportionnel à cette concentration après une durée prédéterminée suite à l'ajout du produit chimique de nettoyage au fluide.

14. Ensemble filtre de fluide liquide selon la revendication 13, **caractérisé en ce que** le dispositif de commande (18) est conçu pour commander le moyen d'injection (24) afin qu'il injecte périodiquement une quantité prédéterminée de produit chimique de nettoyage dans l'écoulement de fluide et de détecter le potentiel d'oxydoréduction ou la valeur de pH par le moyen formant capteur (54, 56) une période de temps prédéterminée après l'injection du produit chimique de nettoyage, jusqu'à ce qu'un potentiel d'oxydoréduction ou une valeur de pH stable minimum soit détecté(e).

15. Ensemble filtre de fluide liquide selon l'une des revendications précédentes, **caractérisé en ce que** le volume du fluide circulant dans une boucle fermée à travers le filtre correspond essentiellement au volume du liquide qui peut être contenu dans le filtre (2).
